(19) Europäisches Patentamt
European Patent Office
Office européen des brevets

(11) EP 2 829 397 A1

(12) EUROPEAN PATENT APPLICATION

(43) Date of publication:
**28.01.2015 Bulletin 2015/05**

(21) Application number: **13177364.0**

(22) Date of filing: **22.07.2013**

(51) Int Cl.:
***B32B 27/08*** (2006.01) ***C08J 5/18*** (2006.01)
***C08L 23/10*** (2006.01) ***C08L 23/12*** (2006.01)
***C08L 23/14*** (2006.01) ***C08L 23/16*** (2006.01)
***B32B 27/32*** (2006.01) ***C08L 23/08*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Basell Poliolefine Italia S.r.l.**
**20127 Milano (IT)**

(72) Inventors:
- **Angelini, Antonella**
  **44122 Ferrara (IT)**
- **Felisati, Andrea**
  **44122 Ferrara (IT)**
- **Marzolla, Roberta**
  **44122 Ferrara (IT)**
- **Neumann, Andreas**
  **44122 Ferrara (IT)**

(74) Representative: **Colucci, Giuseppe**
**Basell Poliolefine Italia S.r.l.**
**Intellectual Property**
**Piazzale G. Donegani 12**
**44122 Ferrara (IT)**

# (54) Heat sealable polyolefin films and sheets

(57) Films or sheets comprising a layer of a heterophasic propylene copolymer containing up to 7.0% by weight of ethylene-derived units and comprising: (a) from 80% to 92% by weight of a matrix phase being a propylene homopolymer or a propylene copolymer containing up to 5% by weight of units derived from ethylene and/or an alpha-olefin; and (b) from 8% to 20% by weight of a rubber phase that is an ethylene-propylene copolymer containing from 20% to 60% by weight of ethylene-derived units.

EP 2 829 397 A1

## Description

The present invention relates to heat-sealable polyolefin films and sheets. Heat-sealable cast and blown polyolefin films are widely used in the packaging field, especially for food packaging, but also for the packaging of other products and for the production of non-packaging items.

Packaging examples are the primary packaging of hygienic items, textile articles, magazines, mailing films, secondary collation packaging, shrink packaging films and sleeves, stretch packaging films and sleeves, form-fill-seal packaging films for portioning various types of articles such as bags, pouches or sachets, vacuum formed blisters. Examples of form-fill-seal applications are the packaging of peat and turf, chemicals, plastic resins, mineral products, food products, small size solid articles. The above applications and, in general, all the applications involving use of plastic films for packaging are included in the general definition of "flexible plastic packaging".

Non-packaging items are, for example, synthetic clothing articles or medical and surgical films, films which are formed into flexible conveying pipes, membranes for isolation and protection in soil, building and construction applications, films which are laminated with non-woven membranes.

The film is characterized by the presence of at least one polyolefin layer that can be easily sealed to itself or to other materials by applying heat and pressure (heat-sealable layer). The features of the seal, in particular the seal strength, are determined by the choice and the relative amounts of the olefin polymers composing the sealing layer.

A type of food packaging that as gained great popularity is the retort packaging. Such packaging is obtained from multiple layers of flexible laminate that are used to create packaging containers such as pouches that, once the food is sealed into, are allowed to a thermal processing for sterilization and/or for reducing bacterial population.

Polymer products made up of heterophasic mixtures of propylene crystalline polymers and elastomeric olefin copolymers, typically obtained by sequential stereospecific polymerization, are establishing themselves in the polypropylene industry. These products possess a satisfying compromise of elastic properties and mechanical resistance and can easily be transformed into manufactured articles by using the equipment and processes normally used for thermoplastic materials. As disclosed in particular in EP0477662, such polymer products can be used to produce films with improved elongation at break and Elmendorf tear properties and good optical properties.

It is known in the art that deterioration of seal strength, optical and impact properties is observed after retorting. It is thus felt the need of polyolefin compositions suitable for film layers having good heat sealability and seal strength after retorting.

It has now surprisingly been found that, by using specific heterophasic propylene copolymers, films can be obtained exhibiting good seal properties, specifically good seal strength, after retorting. Those heterophasic copolymers are suitable to be used as sealing (outermost) layer in a heat-sealing film that can be subject to retorting.

Therefore, an object of the present invention is a film or sheet comprising at least one layer comprising a heterophasic propylene copolymer comprising:

(a) from 80% to 92% by weight, preferably from 82% to 90% by weight, of a matrix phase being a propylene homopolymer or a propylene copolymer containing up to 5% by weight of units derived from ethylene and/or an alpha-olefin; and
(b) from 8% to 20% by weight, preferably from 10% to 18% by weight, of a rubber phase that is an ethylene-propylene copolymer containing from 20% to 60% by weight of ethylene-derived units;

wherein the overall amount of component (a) and of component (b) is 100% by weight, and
wherein the heterophasic propylene copolymer contains up to 7.0%, preferably up to 6.5%, more preferably up to 6.0% by weight of ethylene-derived units.

Suitably, when the content of ethylene-derived units in the rubber phase is higher than 40% by weight, the amount of rubber phase is lower than 15%, preferably 14%, more preferably 13% by weight.

Preferred matrix phase (a) is a propylene homopolymer. When the matrix phase (a) is a copolymer of propylene, the amount of units derived from ethylene and/or from an alpha-olefin is preferably lower than 3%, more preferably lower than 2% by weight. Alpha-olefins that may be present as comonomers in the matrix phase (a) are represented by the formula $CH2=CHR$, wherein R is an alkyl radical, linear or branched, with 2-8 carbon atoms or an aryl, such as a phenyl, radical. Examples of said alpha-olefins are 1-butene, 1-pentene, 1-hexene, 4-methyl-1-pentene and 1-octene.

According to one embodiment, the heterophasic propylene copolymer comprises:

(a1) from 80% to 88% by weight, preferably from 80% to 85% by weight, of a matrix phase being a propylene homopolymer or a propylene copolymer containing up to 5% by weight of units derived from ethylene and/or an alpha-olefin; and
(b1) from 12% to 20% by weight, preferably from 15% to 20% by weight, of a rubber phase that is an ethylene-propylene copolymer containing from 20% to 40%, preferably from 25% to 35%, by weight of ethylene-derived units.

According to another embodiment, the heterophasic propylene copolymer comprises:

(a2) from 85% to 92% by weight of a matrix phase being a propylene homopolymer or a propylene copolymer containing up to 5% by weight of units derived from ethylene and/or an alpha-olefin; and
(b2) from 8% to 15% by weight of a rubber phase that is an ethylene-propylene copolymer containing from 40% to 60%, preferably from 40% to 50%, by weight of ethylene-derived units.

The heterophasic propylene copolymer for use in the film of the invention generally have:

- a value of melt flow rate "L" (230°C, 2.16Kg), for both components (a) and (b) as well as for the final heterophasic copolymer, of from 0.4 to 1.5 g/10 min, preferably of from 0.5 to 1.0 g/10 min;
- a melting temperature ($T_m$) equal to or higher than 150°C, preferably higher than 155°C, more preferably higher than 160°C;
- a fraction soluble in xylene at room temperature for the matrix (a) (XSa) equal to or less than 3.0% by weight, preferably less than 2.5% by weight;
- a fraction soluble in xylene at room temperature for the heterophasic copolymer (XS) equal to or less than 20.0% by weight, preferably less than 18.0% by weight;
- a value of the intrinsic viscosity of the total (for the heterophasic copolymer) fraction soluble in xylene at room temperature (XSIV) of from 1.0 to 4.0, preferably from 2.0 to 3.5, more preferably from 2.5 to 3.0 dl/g.

The heterophasic propylene copolymer for use in the film of the invention is generally obtained by sequential polymerization (reactor blend). Preferably matrix phase (a) is prepared before rubber phase (b).

The process comprising at least two sequential polymerization stages with each subsequent polymerization being conducted in the presence of the polymeric material formed in the immediately preceding polymerization reaction, wherein the homo- or copolymerization stage of propylene to the matrix phase (a) is carried out in at least one stage, then at least one copolymerization stage of mixtures of ethylene with propylene to obtain the rubber phase (b) is carried out.

All the polymerisation stages are suitably carried out in the presence of a stereospecific Ziegler-Natta catalysts. Catalysts having the above-mentioned characteristics are well known in the patent literature, for instance in USP 4,399,054, EP-A-45 977 and USP 4,472,524.

Preferably the Ziegler-Natta polymerisation catalyst comprises:

(i) a solid catalyst component comprising Mg, Ti, an halogen and an electron donor compound (internal donor),
(ii) an alkylaluminum compound, and
(iii) optionally but preferably, an electron-donor compound (external donor).

The internal donor is preferably selected from the esters of mono or dicarboxylic organic acids, such as benzoates, malonates, phthalates and succinates and from 1,3-diethers. They are described, for example, in US patent 4522930, European patents 45977, 361493 and 728769 and international patent applications WO 00/63261 and WO 01/57099. Alkylphthalates, such as diisobutyl, dioctyl and diphenyl phthalate and benzyl-butyl phthalate, can suitably be used. Particularly suited as internal donors are the succinates.

Particularly preferred Ziegler-Natta catalysts for use according to the present invention are those containing at least two internal electron donor compounds, one of which being present in an amount from 40 to 90% by mole with respect to the total amount of internal donors and being selected from succinates and the other being selected from 1,3 diethers. When made with those particularly preferred catalysts, the heterophasic propylene copolymers for use according to the present invention have the additional advantage that the films and sheets produced therefrom do not contain phthalate residues.

Thus, according to another object, the present invention provides a process for the preparation of a heterophasic propylene copolymer comprising:

(a) from 80% to 92% by weight, preferably from 82% to 90% by weight, of a matrix phase being a propylene homopolymer or a propylene copolymer containing up to 5% by weight of units derived from ethylene and/or an alpha-olefin; and
(b) from 8% to 20% by weight, preferably from 10% to 18% by weight, of a rubber phase that is an ethylene-propylene copolymer containing from 20% to 60% by weight of ethylene-derived units;
wherein the overall amount of component (a) and of component (b) is 100% by weight, and
wherein the heterophasic propylene copolymer contains up to 7.0%, preferably up to 6.5%, more preferably up to 6.0% by weight of ethylene-derived units;
said process comprising:

(i) a first step of polymerizing propylene in the optional presence of ethylene and/or of an alpha-olefin, to produce a matrix phase (a); and

(ii) a successive step, carried out in the gas-phase, in the presence of the product coming from step (i), of copolymerizing a mixture of ethylene and propylene to produce a rubber phase (b);

the process being carried out in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mole with respect to the total amount of donors and being selected from succinates and the other being selected from 1,3 diethers,

(b) an aluminum hydrocarbyl compound, and

(c) optionally an external electron donor compound.

The succinate is preferably selected from succinates of formula (I):

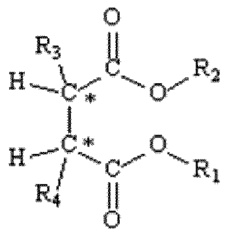

(I)

wherein the radicals R1 and R2, equal to or different from each other, are a C1-C20 linear or branched alkyl, alkenyl, cycloalkyl, aryl, arylalkyl or alkylaryl group, optionally containing heteroatoms; and the radicals R3 and R4 equal to or different from each other, are C1-C20 alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S). R1 and R2 are preferably C1-C8 alkyl, cycloalkyl, aryl, arylalkyl and alkylaryl groups. Particularly preferred are the compounds in which R1 and R2 are selected from primary alkyls and in particular branched primary alkyls. Examples of suitable R1 and R2 groups are methyl, ethyl, n-propyl, n-butyl, isobutyl, neopentyl, 2-ethylhexyl. Particularly preferred are ethyl, isobutyl, and neopentyl. Particularly preferred are the compounds in which the R3 and/or R4 radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II):

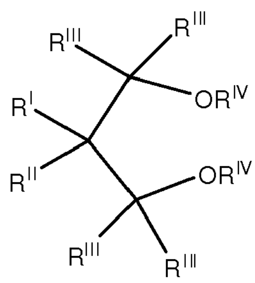

(II)

where RI and RII are the same or different and are hydrogen or linear or branched C1-C18 hydrocarbon groups which can also form one or more cyclic structures; RIII groups, equal or different from each other, are hydrogen or C1-C18 hydrocarbon groups; RIV groups equal or different from each other, have the same meaning of RIII except that they cannot be hydrogen; each of RI to RIV groups can contain heteroatoms selected from halogens, N, O, S and Si. Preferably,

RIV is a 1-6 carbon atom alkyl radical and more particularly a methyl while the RIII radicals are preferably hydrogen. Moreover, when RI is methyl, ethyl, propyl, or isopropyl, RII can be ethyl, propyl, isopropyl, butyl, isobutyl, tert-butyl, isopentyl, 2-ethylhexyl, cyclopentyl, cyclohexyl, methylcyclohexyl, phenyl or benzyl; when RI is hydrogen, RII can be ethyl, butyl, sec-butyl, tert-butyl, 2-ethylhexyl, cyclohexylethyl, diphenylmethyl, p-chlorophenyl, 1-naphthyl, 1-decahydronaphthyl; RI and RII can also be the same and can be ethyl, propyl, isopropyl, butyl, isobutyl, tert-butyl, neopentyl, phenyl, benzyl, cyclohexyl, cyclopentyl.

Specific examples of 1,3-diethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III):

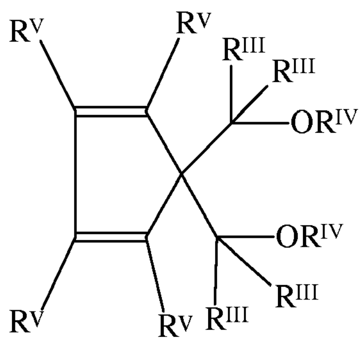

(III)

wherein the radicals RIV have the same meaning explained above and the radicals RIII and RV radicals, equal or different to each other, are selected from the group consisting of hydrogen; halogens, preferably Cl and F; C1-C20 alkyl radicals, linear or branched; C3-C20 cycloalkyl, C6-C20 aryl, C7-C20 alkaryl and C7-C20 aralkyl radicals and two or more of the RV radicals can be bonded to each other to form condensed cyclic structures, saturated or unsaturated, optionally substituted with RVI radicals selected from the group consisting of halogens, preferably Cl and F; Cl-C20 alkyl radicals, linear or branched; C3-C20 cycloalkyl, C6-C20 aryl, C7-C20 alkaryl and C7-C20 aralkyl radicals; said radicals RV and RVI optionally containing one or more heteroatoms as substitutes for carbon or hydrogen atoms, or both.

Preferably, in the 1,3-diethers of formulae (I) and (II) all the RIII radicals are hydrogen, and all the RIV radicals are methyl. Moreover, are particularly preferred the 1,3-diethers of formula (II) in which two or more of the RV radicals are bonded to each other to form one or more condensed cyclic structures, preferably benzenic, optionally substituted by RVI radicals. Specially preferred are the compounds of formula (IV):

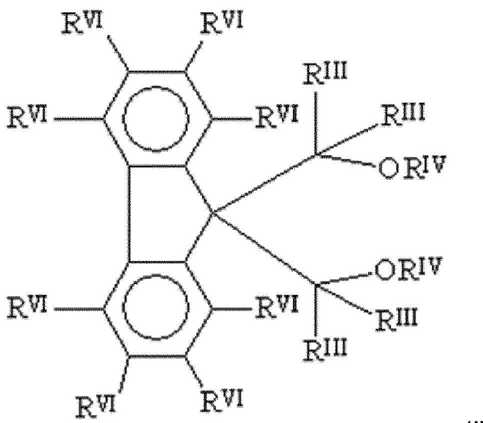

(IV)

wherein the RVI radicals equal or different are hydrogen; halogens, preferably Cl and F; Cl-C20 alkyl radicals, linear or branched; C3-C20 cycloalkyl, C6-C20 aryl, C7-C20 alkylaryl and C7-C20 aralkyl radicals, optionally containing one or more heteroatoms selected from the group consisting of N, 0, S, P, Si and halogens, in particular Cl and F, as substitutes for carbon or hydrogen atoms, or both; the radicals RIII and RIV are as defined above for formula (II).

Specific examples of compounds comprised in formulae (II) and (III) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;

9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably MgCl2 in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl4 and TiCl3; furthermore, also Ti-haloalcoholates of formula Ti(OR)n-yXy can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 μm, more preferably from 20 to 70 μm and even more preferably from 25 to 65 μm. As explained the succinate is present in an amount ranging from 40 to 90% by weight with respect to the total amount of donors. Preferably it ranges from 50 to 85% by weight and more preferably from 65 to 80% by weight. The 1,3-diether preferably constitutes the remaining amount.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt2Cl and Al2Et3Cl3.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Ra5Rb6Si(OR7)c, where a and b are integer from 0 to 2, c is an integer from 1 to 3 and the sum (a+b+c) is 4; R5, R6, and R7, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst-forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes.

The above catalyst components (a), (b) and optionally (c) can be fed to a pre-contacting vessel, in amounts such that the weight ratio (b)/(a) is in the range of 0.1-10 and, if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 5 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (i)a is further characterized by a low concentration of solid in the slurry, typically in the range from 50 g to 300 g of solid per liter of slurry.

The slurry containing the catalyst, preferably in pre-polymerized form, is fed to a gas-phase or liquid-phase polymerization reactor where component (a) is prepared. In case of a gas-phase reactor, it generally consists of a fluidized or stirred, fixed bed reactor or a reactor comprising two interconnected polymerization zones one of which, working under fast fluidization conditions and the other in which the polymer flows under the action of gravity. The liquid phase process can be either in slurry, solution or bulk (liquid monomer). This latter technology is the most preferred and can be carried out in various types of reactors such as continuous stirred tank reactors, loop reactors or plug-flow ones. The polymerization is generally carried out at temperature of from 20 to 120°C, preferably of from 40 to 85°C. When the

polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. Preferably, the component (a) is prepared by polymerizing propylene in liquid monomer, optionally in mixture with ethylene and/or an alpha-olefin, more preferably in a loop reactor.

In this step and/or in the successive polymerization step, hydrogen can be used as a molecular weight regulator.

The copolymer of component (b) is preferably produced in a conventional fluidized-bed gas-phase reactor in the presence of the polymeric material and of the catalyst system coming from the preceding polymerization step. The polymerization mixture coming from the first polymerization step is discharged to a gas-solid separator, and subsequently fed to the fluidized-bed gas-phase reactor operating under conventional conditions of temperature and pressure.

Conventional additives, fillers and pigments, commonly used in olefin polymers, may be added, such as nucleating agents, extension oils, mineral fillers, and other organic and inorganic pigments. The addition of inorganic fillers, such as talc, calcium carbonate and mineral fillers, also brings about an improvement to some mechanical properties, such as flexural modulus and HDT. Talc can also have a nucleating effect.

According to a particular embodiment, a nucleating agent can be added to the heterophasic copolymers for use in the films or sheets according to the invention so to increase the tensile modulus of the heterophasic copolymer.

As previously said, the heat-sealable film according to the invention comprises at least one sealing layer. Thus it can be a mono-layer film, but preferably it is multilayer, and in particular it comprises at least one support layer composed of or comprising a polymeric material, in particular a polyolefin material.

The support layer or layers can be composed of or comprise one or more polymers or copolymers, or their mixtures, of $R\text{-}CH\text{=}CH_2$ olefins where R is a hydrogen atom or a C1-C6 alkyl radical, as for instance 1-butene, 1-hexene, 1-octene, 4-methyl-1-pentene. Particularly preferred are the following polymers:

(1) isotactic or mainly isotactic propylene homopolymers;

(2) random copolymers of propylene with ethylene and/or C4-C8 $\alpha$-olefins, such as for example 1-butene, 1-hexene, 1-octene, 4-methyl-1-pentene, wherein the total comonomer content ranges from 0.05 wt% to 20wt%, or mixtures of said copolymers with isotactic or mainly isotactic propylene homopolymers;

(3) heterophasic copolymers comprising (a) a propylene homopolymer and/or one of the copolymers of item (2), and an elastomeric fraction (b) comprising copolymers of ethylene with propylene and/or a C4-C8 $\alpha$-olefin, optionally containing minor amounts, preferably 1-10% by weight, of a diene such as butadiene, 1,4-hexadiene, 1,5-hexadiene, ethylidene-1-norbornene.

The heterophasic copolymers (3) can be prepared according to known methods by mixing the components in the molten state, or by sequential copolymerization, and generally contain the copolymer fraction (b) in amounts ranging from 5 to 80% by weight. Heterophasic copolymers according to this invention can suitably be used in the support layer.

Other olefin polymers employable for the support layers are HDPE, LDPE and LLDPE polyethylenes.

Examples of polymeric materials different from polyolefins, employable for the support layers, are polystyrenes, polyvinylchlorides, polyamides, polyesters and polycarbonates.

Both the support layers and the heat-sealable layers may comprise additives commonly employed in the art, like stabilizers, pigments, fillers, nucleating agents, slip agents, lubricant and antistatic agents, flame retardants, plasticizers and biocidal agents.

For blown films the thickness of the layers of heat-sealing composition according to the present invention is preferably from 5 to 50 $\mu$m, while the thickness of the support layers is preferably from 15 to 130 $\mu$m. The overall thickness of the said films is preferably of from 20 to 180 $\mu$m.

For cast films the thickness of the layers of heat-sealing composition according to the present invention is preferably from 1 to 100 $\mu$m, more preferably from 5 to 20 $\mu$m, while the thickness of the support layers is preferably from 20 to 200 $\mu$m, preferably from 30 to 100 $\mu$m. The overall thickness of the said films is preferably of from 20 to 300 $\mu$m.

The said packaging films are produced by using processes well known in the art. In particular, extrusion processes can be used. In said extrusion processes the polymer materials to be used for the heat-sealing layers and those to be used for the support layers are molten in different extruders and extruded through a narrow slit. The extruded molten material is pulled away from the slit and cooled before winding-up. Specific examples of extrusion processes are the blown film and cast film processes hereinbelow explained.

For blown film, the molten polymer materials are forced through a circular shaped slit. The extrudate which is drawn off has the shape of a tube, which is inflated by air to form a tubular bubble. The bubble is cooled and collapsed before winding-up.

For cast film, the molten polymer materials are forced through a long, thin, rectangular shaped slit. The extrudate has the shape of a thin film. The film is cooled before winding-up.

According to still another object, the present invention provides manufactured articles comprising a film or sheet as herein described. Particularly interesting among such manufactured articles are, above all retortable packaging items

such as retortable pouches and other containers.

EXAMPLES

The following examples are given to illustrate the present invention without any limiting purpose.

**Test methods**

Molar ratio of feed gases

Determined by gas-chromatography.

Average Particle Size of the adduct and catalysts

Determined by a method based on the principle of the optical diffraction of monochromatic laser light with the "Malvern Instr. 2600" apparatus. The average size is given as P50.

Comonomer content

The content of comonomers was determined by infrared spectroscopy by collecting the IR spectrum of the sample vs. an air background with a Fourier Transform Infrared spectrometer (FTIR). The instrument data acquisition parameters are:

- purge time: 30 seconds minimum
- collect time: 3 minutes minimum
- apodization: Happ-Genzel
- resolution: 2 cm-1.

Sample Preparation - Using a hydraulic press, a thick sheet is obtained by pressing about g 1 of sample between two aluminum foils. A small portion is cut from this sheet to mold a film. Recommended film thickness ranges between 0.02 and 0.05 cm (8 - 20 mils). Pressing temperature is 180±10°C (356°F) and about 10 kg/cm2 (142.2 PSI) pressure for about one minute. The pressure is released, the sample removed from the press and cooled to room temperature.

The spectrum of pressed film sample is recorded in absorbance vs. wavenumbers (cm-1). The following measurements are used to calculate ethylene and 1-butene content:

- Area (At) of the combination absorption bands between 4482 and 3950 cm
- 1 which is used for spectrometric normalization of film thickness;
- Area (AC2) of the absorption band between 750-700 cm-1 after two proper consecutive spectroscopic subtractions of an isotactic non-additivated polypropylene spectrum and then of a reference spectrum of an 1-butene-propylene random copolymer in the range 800-690 cm-1;
- Height (DC4) of the absorption band at 769 cm-1 (maximum value), after two proper consecutive spectroscopic subtractions of an isotactic non-additivated polypropylene spectrum and then of a reference spectrum of an ethylene-propylene random copolymer in the range 800-690 cm-1.

In order to calculate the ethylene and 1-butene content, calibration straights lines for ethylene and 1-butene obtained by using samples of known amount of ethylene and 1-butene are needed:

Calibration for ethylene - A calibration straight line is obtained by plotting AC2/At versus ethylene molar percent (%C2m). The slope GC2 is calculated from a linear regression.

Calibration for 1-butene - A calibration straight line is obtained by plotting DC4/At versus butene molar percent (%C4m). The slope GC4 is calculated from a linear regression.

The spectra of the unknown samples are recorded and then (At), (AC2) and (DC4) of the unknown sample are calculated. The ethylene content (% molar fraction C2m) of the sample is calculated as follows:

$$\%C2m = \frac{1}{G_{C2}} \cdot \frac{A_{C2}}{A_t}$$

The 1-butene content (% molar fraction C4m) of the sample is calculated as follows:

$$\%C4m = \frac{1}{G_{C4}} \cdot \left(\frac{A_{C4}}{A_t} - I_{C4}\right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

Melt flow rate (MFR "L")

Determined according to ISO 1133 (230°C, 2.16 Kg)

Melting temperature ($T_m$) and crystallization temperature ($T_c$)

Both determined by differential scanning calorimetry (DSC) according to the ASTM D 3417 method, which is equivalent to the ISO 11357/1 and 3 method.

Xylene solubles

Determined as follows: 2.5 g of polymer and 250 ml of xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminum container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Intrinsic viscosity (IV)

Determined in tetrahydronaphthalene at 135°C

Tensile modulus (MET)

Determined according to ISO 527-1, -2 (1 mm/min).

Charpy impact strength

Determined according to ISO 179-1, 2010 (Type 1, Edgewise, Notch A).

Ductile brittle transition temperature (DB/TT)

The bi-axial impact resistance is determined through impact with an automatic, computerized striking hammer. The circular test specimens are obtained by cutting with circular hand punch (38 mm diameter) plaques obtained as described below. The circular test specimens are conditioned for at least 12 hours at 23°C and 50 RH and then placed in a thermostatic bath at testing temperature for 1 hour. The force-time curve is detected during impact of a striking hammer (5.3 kg, hemispheric punch with a ½" diameter) on a circular specimen resting on a ring support. The machine used is a CEAST 6758/000 type model no. 2. The DB/TT is the temperature at which 50% of the samples undergoes fragile break when submitted to the above-mentioned impact test. The plaques for DB/TT measurements, having dimensions of 127x127x1.5 mm are prepared according to the following method. The injection press is a Negri Bossi™ type (NB 90) with a clamping force of 90 tons. The mold is a rectangular plaque (127x127x1.5mm). Main process parameters are reported below:

- Back pressure: 20 bar
- Injection time: 3 sec
- Maximum Injection pressure: 14 MPa
- Hydraulic injection pressure: 6-3 MPa
- First holding hydraulic pressure: 4±2 MPa
- First holding time: 3 sec
- Second holding hydraulic pressure: 3±2 MPa
- Second holding time: 7 sec
- Cooling time: 20 sec
- Mold temperature: 60 °C
- Melt temperature 220 to 280 °C

Seal strength

Measured by using a Brugger HSG/ETK sealer with 10 mm Teflon-coated sealing bar at 4 bar pressure, 190°C temperature, 1.0 second dwell time. The cast film specimen to be sealed has a thickness of 70 micron. The sealing is carried out on the chill roll side. The heat-sealed film specimen is sterilized at 135°C for 45 min in a Systec DX-65 autoclave and left in the autoclave until they reach room temperature. Then it is kept at 23°C and 50% relative humidity for at least 12 hours. The seal strength is measured using an Instron model 5565A tensile tester. Clamps distance 30 mm. Crosshead speed 100 mm/min. Specimen width 15mm. The force at yield measured during the tensile test is defined as the seal strength.

**Examples 1C (comparative) and 2-4**

Preparation of the solid catalyst component

Into a 500 mL four-necked round flask, purged with nitrogen, 250 mL of $TiCl_4$ were introduced at 0°C. While stirring, 10.0 g of microspheroidal $MgCl_2•2.1C_2H_5OH$ having average particle size of 47μm (prepared in accordance with the method described in example 1 of EP728769) and an amount of diethyl 2,3-diisopropylsuccinate such as to have a Mg/succinate molar ratio of 15 were added. The temperature was raised to 100°C and kept at this value for 60 minutes. After that the stirring was stopped and the liquid was siphoned off. After siphoning, fresh $TiCl_4$ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh $TiCl_4$ was added. Then the temperature was raised to 90°C for 15min. After sedimentation and siphoning at 90°C the solid was washed three times with anhydrous hexane (3 x 100 ml) at 60 °C and additional three times with anhydrous hexane (3 x 100 ml) at 25 °C. The obtained solid catalyst component had a total amount of internal electron donor compounds of 12.0% by weight with respect to the weight of the solid catalyst component.

Preparation of the catalyst system - Precontact

Before introducing it into the polymerization reactors, the solid catalyst component described above is contacted with aluminum-triethyl (TEAL) and with the donor indicated in Table 1 under the conditions reported therein.

Prepolymerization

The catalyst system is then subject to prepolymerization treatment at 20°C by maintaining it in suspension in liquid propylene for a residence time of 8 minutes before introducing it into the polymerization reactor.

Polymerization

The polymerization was carried out in continuous mode in two reactors in series: a first liquid phase loop reactor, operated at a temperature of 75°C and a pressure of 41 barg, and a second gas phase polymerization reactor operated at a temperature of 80°C and a pressure of 11-12 barg. Hydrogen was used as molecular weight regulator. The polymer particles exiting from the polymerization step were subjected to a steam treatment to remove the unreacted monomers and dried under a nitrogen flow.
Process conditions are reported in Table 1. Characterization data for the obtained polymers are reported in Table 2.
The polymer particles were blended in a Werner 58 extruder with the following additives:

- Calcium stearate - 0.065 %wt
- IRGAFOS® 168 - 0.065 %wt
- IRGANOX® 1010 - 0.065 %wt

Characterization data for the thus-obtained composition are reported in Table 3.

Preparation of film specimens

Cast films have been prepared by extruding each test composition in a single screw Dr. Collin cast film extruder equipped with a three layers coextrusion cast film line (main extruder screw diameter 45 mm, L/D 30; two side extruders screw diameter 30 mm, L/D 30), at a melt temperature of 190-250 °C. The throughput was about 18.5kg/h. The cast film has been winded at a film drawing speed between 12 and 13m/min with a thickness of 70 micron.

**Examples 5C (comparative) and 6**

It was worked according to the procedure described in examples 1-4, except that the solid catalyst component was prepared as described as in Examples 1-3 of International application WO2009/050045. Process conditions, characterization data of the polymers, of the pellets and of the film obtained therefrom are reported in Tables 1-3.

**Example 7**

Part of the polymer particles obtained in Example 2 were blended in a Werner 58 extruder with the following additives:

- Calcium stearate - 0.065 %wt
- IRGAFOS® 168 - 0.065 %wt
- IRGANOX® 1010 - 0.065 %wt
- Hyperform® HPN-20E - 0.0270 %wt.

Process conditions, characterization data of the polymers, of the pellets and of the film obtained therefrom are reported in Tables 1-3.

Table 1 - Process conditions

| **Example** | **1C** | **2** | **3** | **4** | **5C** | **6** |
|---|---|---|---|---|---|---|
| **Precontact** | | | | | | |
| Temperature (°C) | 12 | 12 | 14 | 14 | 14 | 14 |
| Residence time (min) | 25 | 25 | 20 | 19 | 21 | 23 |
| TEAL/donor ratio (wt) | 10 | 8.6 | 4.4 | 4 | 5.5 | 6 |
| Donor type | C | C | D | D | D | D |

(continued)

| **Loop 1st reactor in liquid phase - propylene homopolymerization** | | | | | | |
|---|---|---|---|---|---|---|
| Residence time (min) | 92 | 89 | 96 | 85 | 79 | 81 |
| $H_2$ feed (ppm) | 517 | 420 | 450 | 940 | 1100 | 960 |
| **Gas-Phase reactor - ethylene/propylene copolymerization** | | | | | | |
| Pressure (barg) | 11 | 11 | 11 | 12 | 12 | 12 |
| Residence time (min) | 20 | 26 | 12 | 35 | 20 | 30 |
| $C_2^-/C_2^-+C_3^-$ (mol_ratio) | 0.31 | 0.16 | 0.30 | 0.15 | 0.32 | 0.17 |
| $H_2/C_2^-$ (mol_ratio) | 0.028 | 0.025 | 0.040 | 0.034 | 0.06 | 0.051 |
| Notes: $C_2^-$ = ethylene; $C_3^-$ = propylene; $H_2$ = hydrogen; C = cyclohexyl-methyl-di-methoxy-silane; D = di-cyclopentyl-di-methoxy-silane | | | | | | |

**Table 2 - Polymer characterization**

| **Example** | | **1C** | **2** | **3** | **4** | **5C** | **6** |
|---|---|---|---|---|---|---|---|
| **Matrix phase (a)** | | | | | | | |
| Amount | % | 81 | 83 | 82 | 85 | 82 | 82 |
| MFR "L" | g/10' | 0.9 | 0.9 | 0.8 | 0.8 | 0.7 | 0.8 |
| XSa | wt% | 2.3 | 2.4 | 2.0 | 2.1 | 1.8 | 1.8 |
| **Rubber phase (b)** | | | | | | | |
| Amount | % | 19 | 17 | 12 | 15 | 18 | 17 |
| MFR "L" | g/10' | 0.7 | 0.7 | 0.8 | 0.7 | 0.7 | 0.6 |
| Ethylene units (*) | % | 43 | 31 | 43 | 31 | 42 | 32 |
| **Heterophasic copolymer** | | | | | | | |
| Ethylene units | % | 8.2 | 5.3 | 5.2 | 4.7 | 7.6 | 5.4 |
| XS | wt% | 18.3 | 17.0 | 12.3 | 15.2 | 17.4 | 16.5 |
| XSIV | dl/g | 2.85 | 2.89 | 2.85 | 2.85 | 2.61 | 2.9 |
| (*) = calculated | | | | | | | |

**Table 3 - Pellets and film characterization**

| **Example** | | **1C** | **2** | **3** | **4** | **5C** | **6** | **7** |
|---|---|---|---|---|---|---|---|---|
| **Pellets** | | | | | | | | |
| MFR "L" | g/10' | 0.8 | 1.1 | 0.8 | 0.8 | 0.7 | 0.6 | 0.8 |
| MET 48h | MPa | 1040 | 970 | 1280 | 990 | 1060 | 1030 | 1030 |
| Charpy -20°C 48h | $kJ/m^2$ | 7.6 | 4.0 | 6.5 | 6.6 | 8.5 | 6.7 | 8.1 |
| DB/TT | °C | -45.6 | n/a | -25.5 | -15.5 | -38.3 | -23.6 | -25.8 |
| Tm | °C | 162.6 | 163.1 | 162.6 | 162.3 | 164.2 | 163.5 | 163.1 |
| $T_c$ | °C | 107.7 | 109.7 | 108.7 | 108.5 | 114.2 | 112.6 | 118.9 |
| Film | | | | | | | | |

(continued)

| Film | | | | | | | | |
|---|---|---|---|---|---|---|---|---|
| Seal strenght | N | 25.3 | 28.1 | 28.6 | 28.2 | 21.7 | 29.9 | 28.1 |
| n/a = not available | | | | | | | | |

## Claims

1. A film or sheet comprising at least one layer comprising a heterophasic propylene copolymer comprising:

    (a) from 80% to 92% by weight, preferably from 82% to 90% by weight, of a matrix phase being a propylene homopolymer or a propylene copolymer containing up to 5% by weight of units derived from ethylene and/or an alpha-olefin; and
    (b) from 8% to 20% by weight, preferably from 10% to 18% by weight, of a rubber phase that is an ethylene-propylene copolymer containing from 20% to 60% by weight of ethylene-derived units;

    wherein the overall amount of component (a) and of component (b) is 100% by weight, and
    wherein the heterophasic propylene copolymer contains up to 7.0%, preferably up to 6.5%, more preferably up to 6.0% by weight of ethylene-derived units.

2. The film or sheet according to claim 1, wherein, when the content of ethylene-derived units in the rubber phase is higher than 40% by weight, the amount of rubber phase is lower than 15%, preferably 14%, more preferably 13% by weight.

3. The film or sheet according to claim 1 or 2, wherein the heterophasic propylene copolymer comprises:

    (a1) from 80% to 88% by weight of a matrix phase being a propylene homopolymer or a propylene copolymer containing up to 5% by weight of units derived from ethylene and/or an alpha-olefin; and
    (b1) from 12% to 20% by weight of a rubber phase that is an ethylene-propylene copolymer containing from 20% to 40%, preferably from 25% to 35%, by weight of ethylene-derived units.

4. The film or sheet according to claim 1 or 2, wherein the heterophasic propylene copolymer comprises:

    (a2) from 85% to 92% by weight of a matrix phase being a propylene homopolymer or a propylene copolymer containing up to 5% by weight of units derived from ethylene and/or an alpha-olefin; and
    (b2) from 8% to 15% by weight of a rubber phase that is an ethylene-propylene copolymer containing from 40% to 60%, preferably from 40% to 50%, by weight of ethylene-derived units.

5. The film or sheet according to any of claims 1 to 4, wherein the heterophasic propylene copolymer comprises a nucleating agent.

6. A process for the preparation of a heterophasic propylene copolymer comprising:

    (a) from 80% to 92% by weight, preferably from 82% to 90% by weight, of a matrix phase being a propylene homopolymer or a propylene copolymer containing up to 5% by weight of units derived from ethylene and/or an alpha-olefin; and
    (b) from 8% to 20% by weight, preferably from 10% to 18% by weight, of a rubber phase that is an ethylene-propylene copolymer containing from 20% to 60% by weight of ethylene-derived units;
    wherein the overall amount of component (a) and of component (b) is 100% by weight, and
    wherein the heterophasic propylene copolymer contains up to 7.0%, preferably up to 6.5%, more preferably up to 6.0% by weight of ethylene-derived units.
    said process comprising:

        (i) a first step of polymerizing propylene in the optional presence of ethylene and/or of an alpha-olefin, to produce a matrix phase (a); and
        (ii) a successive step, carried out in the gas-phase, in the presence of the product coming from step (i), of

copolymerizing a mixture of ethylene and propylene to produce a rubber phase (b);

the process being carried out in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mole with respect to the total amount of donors and being selected from succinates and the other being selected from 1,3 diethers,
(b) an aluminum hydrocarbyl compound, and
(c) optionally an external electron donor compound.

**7.** Manufactured articles, particularly retortable packaging items, comprising a film or sheet according to any of claims 1 to 5.

Europäisches Patentamt
European Patent Office
Office européen des brevets

# EUROPEAN SEARCH REPORT

Application Number
EP 13 17 7364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 661 935 A1 (BOREALIS TECH OY [FI]) 31 May 2006 (2006-05-31) * paragraphs [0001] - [0086]; claims 1-20 * | 1-7 | INV. B32B27/08 C08J5/18 C08L23/10 C08L23/12 C08L23/14 C08L23/16 B32B27/32 C08L23/08 |
| X | EP 2 077 286 A1 (TOTAL PETROCHEMICALS RES FELUY [BE]) 8 July 2009 (2009-07-08) * paragraphs [0001] - [0080]; claims 1-23 * | 1-7 | |
| X | EP 1 903 070 A1 (BOREALIS TECH OY [FI]) 26 March 2008 (2008-03-26) * paragraphs [0001] - [0240]; claims 1-28 * | 1-7 | |
| X | WO 2009/073685 A1 (DOW GLOBAL TECHNOLOGIES INC [US]; DUGUID GRANT W [ES]; DE MARCO ROSANN) 11 June 2009 (2009-06-11) * page 1, line 1 - page 34, last line; claims 1-23 * | 1-7 | TECHNICAL FIELDS SEARCHED (IPC) |
| X | EP 2 143 760 A1 (BOREALIS AG [AT]) 13 January 2010 (2010-01-13) * paragraphs [0001] - [0104]; claims 1-20 * | 1-7 | B32B C08J C08L |
| X | EP 2 154 195 A1 (BOREALIS AG [AT]) 17 February 2010 (2010-02-17) * paragraphs [0001] - [0121]; claims 1-20 * | 1-7 | |

The present search report has been drawn up for all claims

1

| Place of search | Date of completion of the search | Examiner |
|---|---|---|
| Munich | 3 December 2013 | Ansorge, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 7364

This annex lists the patent family members relating to the patent documents cited in the above-mentioned European search report. The members are as contained in the European Patent Office EDP file on
The European Patent Office is in no way liable for these particulars which are merely given for the purpose of information.

03-12-2013

| Patent document cited in search report | Publication date | Patent family member(s) | Publication date |
|---|---|---|---|
| EP 1661935 A1 | 31-05-2006 | AT 380841 T | 15-12-2007 |
| | | CN 101175796 A | 07-05-2008 |
| | | DE 05010360 T1 | 16-11-2006 |
| | | DE 602005003763 T2 | 09-07-2009 |
| | | EA 200702206 A1 | 28-04-2008 |
| | | EP 1661935 A1 | 31-05-2006 |
| | | ES 2269021 T1 | 01-04-2007 |
| | | WO 2006119901 A1 | 16-11-2006 |
| EP 2077286 A1 | 08-07-2009 | AT 544792 T | 15-02-2012 |
| | | CN 101896518 A | 24-11-2010 |
| | | DK 2229415 T3 | 19-03-2012 |
| | | EA 201000767 A1 | 30-12-2010 |
| | | EP 2077286 A1 | 08-07-2009 |
| | | EP 2229415 A1 | 22-09-2010 |
| | | ES 2379037 T3 | 20-04-2012 |
| | | KR 20100101622 A | 17-09-2010 |
| | | US 2011124798 A1 | 26-05-2011 |
| | | WO 2009087039 A1 | 16-07-2009 |
| EP 1903070 A1 | 26-03-2008 | AT 439393 T | 15-08-2009 |
| | | AT 456608 T | 15-02-2010 |
| | | BR PI0717001 A2 | 08-10-2013 |
| | | CN 101501110 A | 05-08-2009 |
| | | EA 200970221 A1 | 28-08-2009 |
| | | EP 1903070 A1 | 26-03-2008 |
| | | EP 2054464 A1 | 06-05-2009 |
| | | ES 2331091 T3 | 21-12-2009 |
| | | ES 2340436 T3 | 02-06-2010 |
| | | KR 20090016609 A | 16-02-2009 |
| | | US 2009182105 A1 | 16-07-2009 |
| | | WO 2008022802 A1 | 28-02-2008 |
| WO 2009073685 A1 | 11-06-2009 | AR 069575 A1 | 03-02-2010 |
| | | AT 550383 T | 15-04-2012 |
| | | CN 101932651 A | 29-12-2010 |
| | | EP 2220158 A1 | 25-08-2010 |
| | | ES 2381520 T3 | 29-05-2012 |
| | | US 2010255232 A1 | 07-10-2010 |
| | | WO 2009073685 A1 | 11-06-2009 |
| EP 2143760 A1 | 13-01-2010 | AT 501216 T | 15-03-2011 |
| | | CN 102089378 A | 08-06-2011 |
| | | EP 2143760 A1 | 13-01-2010 |
| | | WO 2010003953 A1 | 14-01-2010 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO. EP 13 17 7364

This annex lists the patent family members relating to the patent documents cited in the above-mentioned European search report. The members are as contained in the European Patent Office EDP file on
The European Patent Office is in no way liable for these particulars which are merely given for the purpose of information.

03-12-2013

| Patent document cited in search report | Publication date | Patent family member(s) | Publication date |
|---|---|---|---|
| EP 2154195 A1 | 17-02-2010 | AT 494327 T | 15-01-2011 |
| | | EP 2154195 A1 | 17-02-2010 |
| | | ES 2358859 T3 | 16-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0477662 A
- US P4399054 A
- EP 45977 A
- US P4472524 A
- US 4522930 A
- EP 361493 A
- EP 728769 A
- WO 0063261 A
- WO 0157099 A
- US P4298718 A
- US P4495338 A
- WO 2009050045 A